# NEUE EUROPÄISCHE PATENTSCHRIFT

(11) **EP 0 091 139 B2**
(45) Veröffentlichungstag und Bekanntmachung des Hinweises auf die Entscheidung über den Einspruch: **27.01.1993**
(45) Hinweis auf die Patenterteilung: 16.07.1986
(21) Anmeldenummer: 83200311.5
(22) Anmeldetag: 04.03.1983
(51) Int. Cl.: F02B 37/00

(54) **Abgasturbolader an aufgeladenem Dieselmotor**
Exhaust turbocharger on a supercharged diesel engine
Turbocompresseur à gaz d'échappement pour moteur diesel suralimenté

(30) Priorität: 05.04.1982 CH 2076/82
(43) Veröffentlichungstag der Anmeldung: 12.10.1983
(73) Patentinhaber: BBC Brown Boveri AG, CH-5401 Baden (CH)
(72) Erfinder: Streuli, Adrian, CH-5116 Schinznach-Bad (CH)

(56) Entgegenhaltungen:
- EP-A- 0 048 027
- CH-A- 357 243
- DE-B- 1 149 200
- DE-B- 1 237 380
- DE-C- 962 764
- US-A- 2 625 006
- US-A- 4 100 742
- Bericht und Diskussionsreport D 21, CIMAC-Kongress, Helsinki, 1981
- K. Zinner, Aufladung von Verbrennungsmotoren, zweite Auflage, Springer-Verlag, 1980, Seite 117 und Seite 332
- Bericht A 12, Seite 550, CIMAC-Kongress, Kopenhagen, 1962
- HANSA - Schiffahrt - Schiffbau - Hafen, 111. Jahrgang, 1974, Nr. 20, S. 1768
- The Motor Ship, June 1984, Seite 7
- Marine Propulsion, June 1984, Seite 3
- The Motor Ship, March 1985, Seite 5
- Diesel & Gas Turbine Worldwide, May 1985, Seite 45
- Bericht A 12, Seiten 6, 11 und 12, CIMAC-Kongress, Kopenhagen 1962

## Beschreibung

Die Erfindung betrifft einen Abgasturbolader gemäss Oberbegriff des Patentanspruchs 1.

Ein derartiger Abgasturbolader ist bekannt aus dem JP-U-54-158912. Bei diesem bekannten ladersystem sind die Laderturbine und die Nutzturbine direkt mit dem Abgasreceiver verbunden. Die dartige Nutzturbine wird bei einer vorbestimmten Motorteillast ausser Betrieb gezsetzt und oberhaeb dieses Grenzwerdes zugesmaltet.

Abgasturbolader mit Nutzturbine sind an sich bekannt. Sie werden entweder eingesetzt zur Verbesserung des spezifischen Brennstoffverbrauchs oder zum optimalen Motorbetrieb bei stark unterschiedlichen klimatischen Bedingungen. So ist in der Zeitschrift « DIESEL PROGRESS North American », Juli 1981, Seite 55 in einem Schaltschema eine Anlage gezeigt, bei der eine Niederuck-Nutzturbine mit den Abgasen der Turboladerturbine betrieben wird. Die erzeugte Leistung wird über ein Getriebe an den Dieselmotor abgegeben.

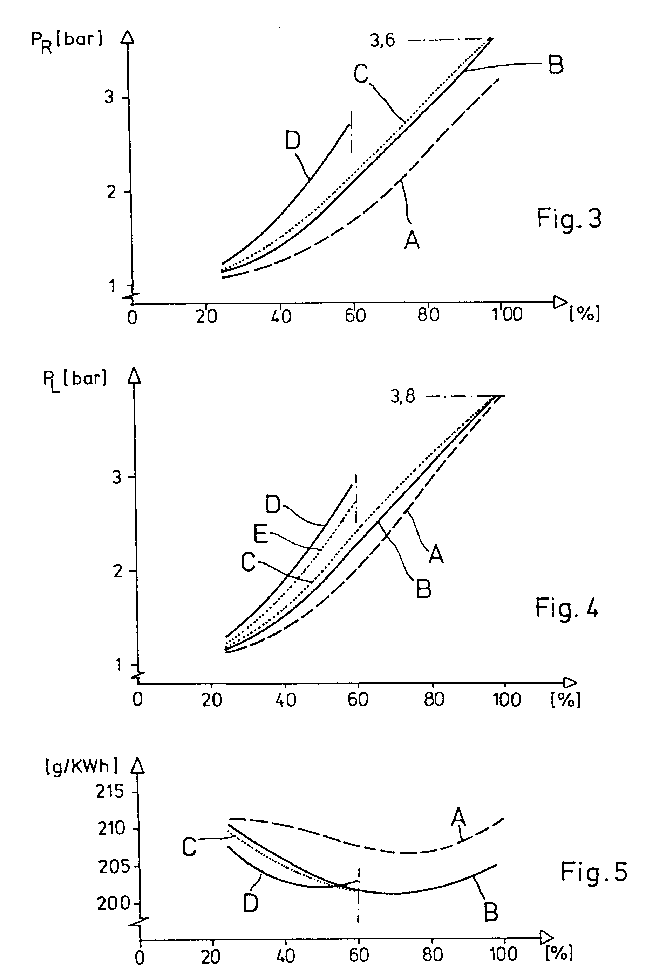

Eine weitere Lösung, bei der eine zur Turboladerturbine parallelgeschaltete Nutzturbine einen Generator antreibt, ist in der am 14. CIMAC Kongress in Helsinki 1981 herausgegeben Druckschrift « Total Economy of Engine Service With Regard to Up-Keep Efforts, Specific Fuel Consumption and Waste Heat Recovery » in Fig. 5 gezeigt und beschrieben. Diese Nutzturbine ist mit variabler Eintrittsgeometrie versehen und arbeitet derart, dass bei gemässigten klimatischen Bedingungen elektrische Energie erzeugt wird. Bei heissem Klima hingegen wird nahezu das gesamte Motorabgas der Turboladerturbine zugeführt.

Ein Abgasturbolader der eingangs genannten Art ist bekannt aus der DE-B-1 149 200.

Es handelt sich bei der dortigen « Hilfs »-Turbine, die beim normalen Motorbetrieb abgekuppelt ist, nicht um eine eigentliche, leistungsabgebende Nutzturbine, sondern um eine Andrehturbine. Sie wird nurwährend des Startvorganges des Verbrennungsmotors beaufschlagt, ist jedoch nicht von dessen Abgasen beaufschlagt. Die Laderturbine selbst wird für einen konstanten Leistungsdruck über den ganzen Betriebsbereich ausgelegt. Dies bedingt die Anordnung eines üblichen Abgasabblaseventils vor der Laderturbine.

Ähnliche Lösungen mit Nutzturbinen, die allerdings nicht abschaltbar sind, sind bekannt aus den CH-A-357 243, EP-A-48027 und US-A-4 100 742.

Bei den strömungsmässig hintereinandergeschalteten Abgasturbinen gemäss CH-A-357 243 ist die zuerst durchströmte und damit nicht abschaltbare Turbine als Nutzturbine konzipiert.

Die zuletzt durchströmte Turbine, die mit dem vollen Durchsatz arbeitet, kann nicht abgeschaltet oder umströmt werden, da sie den Verdichter antreiben muss.

Bei der Nutzturbine nach EP-A-48027 handelt es sich um eine Kombination von Parallel- und Serienschaltung, bei der die « Serie »- Nutzturbine auch bei Motorteillast durchströmt wird. Dadurch ist der Gegendruck für die Turboladerturbine bei Teillast erhöht. Bei Vollast wird ein zweites Abblaseventil vor der Nutzturbine geöffnet.

Auch bei der permanent durchströmten Nutzturbine nach US-A-4 100 742 wird bei hohen Lasten ein Abblaseventil geöffnet. Dadurch kann der Gegendruck an der Laderturbine, die nach dem Impulsprinzip arbeitet, begrenzt werden.

Alle bekannten Schaltungen sind indes nicht in der Lage, einen Beitrag zur Lösung des Teillastproblems bei hochaufgeladenen Dieselmotoren zu liefern. Dieses Problem äussert sich bekanntlich so, dass bei reduzierter Drehzahl des Motors, bspw. im Teillastgebiet der Propellerkurve, der Ladedruck stark abfällt, was zu Luftmangel und dadurch zu erhöhter thermischen Belastung der Bauteile führt. Der Grund für dieses Verhalten ist in der konstant bleibenden Düsenfläche der Turbine zu sehen, die bei Teillast zu gross ist.

Der im kennzeichnenden Teil des Patentanspruchs 1 definierten Erfindung liegt deshalb die Aufgabe zugrunde, bei einem System der eingangs genannten Art mit einfachen Mitteln sowohl den spezifischen Verbrauch im ganzen Drehzahlbereich als auch das Teillastverhalten des Motors zu verbessern.

Die Massnahme, die Düsenfläche der Laderturbine für einen bestimmten Teillastbereich zu dimensionieren, d.h. kleiner zu gestalten gegenüber der Vollastauslegung, bewirkt eine Anhebung des Druckes im Abgasreceiver. Hierdurch steht gerade im Teillastbereich genügend Energie an der Laderturbine zur Verfügung, um den gewünschten Ladedruck im Verdichter zu erzeugen. Volle Wirkung ist allerdings nur in Funktionsverschmelzung mit der zweiten Massnahme, d.h. dem Abschalten der Nutzturbine im Teillastbetrieb zu erzielen.

Im Vollastbereich ist die Leistungsabgabe der Nutzturbine hingegen grösser als die durch die Steigerung des Receiverdruckes verursachte Erhöhung des Ladungswechselverlustes am Motor.

Als besonders günstig ist überdies anzusehen, dass der aufzuladende Motor keiner Modifikation bedarf. Nicht einmal die Steuerzeiten sind abzuändern. Somit eignet sich die Erfindung zum problemlosen Anbau an bestehenden Motoren.

Es versteht sich, dass unterschiedliche Dimensionierungen der Turboladerturbine vorzunehmen sind, je nachdem ob eine Parallelschaltung oder eine Serienschaltung der Nutzturbine zur Anwendung gelangt. Deren spezifische Vorteile sowie weitere günstige Ausbildungen der Erfindung ergeben sich aus der nachfolgenden Figurenbeschreibung.

In der Zeichnung sind zwei Ausführungsbeispiele der Erfindung schematisch dargestellt. Es zeigen:
Fig. 1 eine Prinzipskizze mit Parallelschaltung von Turbolader- und Nutzturbine.
Fig. 2 eine Prinzipskizze mit Serienschaltung von Turboladerturbine und Nutzturbine.
Fig. 3 ein Schaubild Receiverdruck in Funktion der Motorlast.
Fig. 4 ein Schaubild Ladedruck in Funktion der Motorlast.
Fig. 5 ein Schaubild spezifischer Brennstoffverbrauch in Funktion der Motorlast.
Fig. 6 eine Abwandlung der Prinzipskizze nach Fig. 1.
Fig. 7 eine Abwandlung der Prinzipskizze nach Fig. 2.

In den Figuren sind die gleichen Elemente jeweils mit den gleichen Bezugszeichen versehen. Die Strömungsrichtung der Arbeitsmedien ist mit Pfeilen bezeichnet. Erfindungsunwesentliche Elemente wie bspw. die masstabsgerechte Darstellung der Turbolader und Nutzturbinen oder die Art und Anordnung der Leistungsabgabe der Nutzturbine sind fortgelassen.

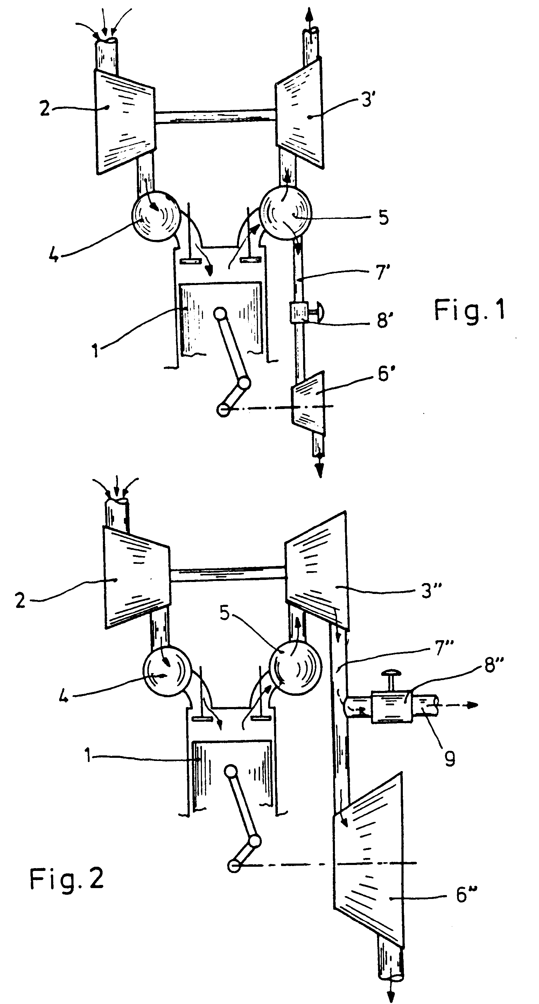

Das in den Fig. 1 und 2 skizzierte System besteht jeweils aus einem Dieselmotor 1, der über den Verdichter 2 eines Abgasturboladers mit Druckluft versorgt ist. Den Verdichterantrieb besorgt die Laderturbine 3', 3", welche mit den Abgasen des Dieselmotors 1 beaufschlagt ist. Eine Nutzturbine 6', 6" gibt mechanische Leistung über ein nicht gezeigtes Getriebe an das System ab. Dies kann bspw. über den Räderkasten des Motors oder bei Schiffsmotoren über das Übersetzungsgetriebe Motorwelle/Propellerwelle geschehen.

Die Erfindung wird nun anhand von zwei Zahlenbeispielen erläutert. Es versteht sich, dass auf die Bekanntgabe von allen den Berechnungen und Versuchen zugrundeliegenden Absolutwerten verzichtet wird, da diese wegen ihrer Abhängigkeit von allzu zahlreichen Parametern ohnehin ungenügende Aussagekraft besitzen.

Ausschlaggebend für die anzustellenden Überlegungen sind die herrschenden Drücke in der Kammer 4, im folgenden mit Ladedruck P_{L} bezeichnet und im Abgasreceiver 5, im folgenden mit Receiverdruck P_{R} bezeichnet. Um das Ausmass der mit der Erfindung erzielbaren Vorteile voll erkennen zu können, ist eine Quantifizierung dieser beiden Drücke erforderlich.

Zugrundegelegt wird ein sechszylindriger Modelldieselmotor, wie er bspw. für Schiffsantriebe Verwendung findet. Er weist eine Leistung von ca. 400 KW/Zylinderauf, eine Drehzahl von 750 U/min und einen spez. mittleren Druck von ca. 23 bar. Die Spül- überschneidung wird mit 100° Kurbelwinkel angesetzt, wodurch sich auch bei Teillast keine Probleme ergeben.

Soll eine Hochaufladung vorgenommen werden, so beträgt nach derzeitigem technischen Stand der Ladedruck P_{L} bei Vollast ca. 3,8 bar. Berücksichtigt man ferner die derzeitigen Wirkungsgrade von Abgasturboladern, so ist bei Anwendung von nur einer Turboladerturbine ein Receiverdruck von ca. 3,2 bar notwendig, um diesen Ladewert erzielen zu können. Der Turbinenquerschnitt einer solchen einzelnen Turbine sei im folgenden als Ausgangslage mit 100% bezeichnet. Dieser 100%-ige Turbinenquerschnitt kann selbstverständlich auch auf zwei oder mehrere Turbinen aufgeteilt werden, wie es bspw. unter dem Begriff der Registeraufladung bekannt ist. Aber auch der eingangs zitierte Stand der Technik arbeitet offensichtlich mit 100%-igem Turbinenquerschnitt.

Ausgehend von der gleichzeitigen Verwendung einer leistungsabgebenden Nutzturbine wird nun vorgesehen, den Receiverdruck P_{R} anzuheben. Bei 2-Taktmotoren und gespülten 4-Taktmotoren kann dies bis zu einem Wert geschehen, bei dem eine ausreichende Spülung noch gewährleistet ist; dies kann fast bis in den Bereich des Ladedrucks P_{L} hinreichen. Bei nicht gespülten 4-Taktmotoren, bspw. bei Fahrzeugmotoren, kann der Receiverdruck weit über den Ladedruck hinaus gesteigert werden. Selbstverständlich erhöht sich bei einer Steigerung des Receiverdruckes die Ausschiebearbeit und somit der Ladungswechselverlust des Motors. Da diese Verluste im Gegensatz zur gewinnbaren Nutzturbinenarbeit mit steigendem Reiceiverdruck ungefähr linear zunehmen, muss es folglich einen optimalen Receiverdruckbereich geben.

Ein erhöhter Receiverdruck wird dadurch erreicht, dass der von den Abgasen beaufschlagte Turbinenquerschnitt von 100% auf 90% reduziert wird. Der Druck beim Modellmotor wird dadurch von 3,2 bar auf 3,6 bar erhöht, liegt somit immer noch unter dem gewünschten Ladedruck von 3,8 bar.

Dieser erhöhte Receiverdruck hat nun zur Folge, dass ein grösserer Teil der potentiellen Abgasenergie ausgenutzt werden kann, da auch die Drosselverluste vom Zylinder zum Receiverhin reduziert sind. Um den erwähnten Ladedruckzu erzielen, d.h. um die erforderliche Verdichterleistung zu erbringen, benötigt die Laderturbine nicht mehr das vorhandene Energieangebot. Der nicht benötigte Teil wird in der Nutzturbine verarbeitet.

Dies kann nun auf zwei unterschiedliche Arten geschehen. Entweder wird, wie in Fig. 1 gezeigt, die Nutzturbine 6' parallel geschaltet oder sie kann nach Fig. 2 in Serie geschaltet werden (6"). Im ersten Fall wird die Turbinenfläche wiederum aufgeteilt und zwar entfallen 70% der Fläche auf die Laderturbine 3' und 10% auf die Nutzturbine 6'. Letztere ist demnach eine sehr kleine und schnelldrehende Turbine. Im zweiten Fall wird die Laderturbine 3" fürdie vollen 80% dimensioniert; sie verarbeitet indes nur einen Teil des Enthalpiegefälles. Die nachgeschaltete Nutzturbine 6" ist demnach eine Niederdruckturbine, die das Restgefälle in mechanische Arbeit umsetzt. Als Richtwert kann angegeben werden, dass das teilentspannte Abgas einen Zustand innehat, dereine Dimensionierung der Nutzturbine 6" für 300% erfordert.

Diese Grössenordnungen dokumentieren die Daseinsberechtigung beider Schaltungen. Die parallele Nutzturbine eignet sich für grosse Motoren ab bspw. 3000 KW. Sie ist billig, erfordert jedoch ein relativ aufwendiges Getriebe. Die Serie-Nutzturbine ist, da sie voluminös und somit teuer ist, bei kleinen Motoren bis ca. 3000 KW mit Vorteil anwendbar. Da sie mit niedriger Drehzahl läuft, kann die Leistungsabgabe über ein billiges Normgetriebe erfolgen.

Die bisherigen Überlegungen wurden für Motorvollast angestellt. Sie führen zum Ergebnis, dass bei einer unwesentlichen Reduktion der Leistungsdichte, d.h. des mittleren spez. Druckes um 1-2% eine Verbrauchsverbesserung, d.h. eine Brennstoffersparnis von 3% resultiert. Dabei werden sowohl die thermischen als auch die mechanischen Belastungen des Motors gegenüber dem Ausgangsfall (100%) nicht ungünstiger.

Ihre volle Wirksamkeit entfaltet die Erfindung beim Teillastbetrieb erst mit der Abschaltbarkeit der Nutzturbine. Hierzu werden folgende bekannte Zusammenhänge in Erinnerung gerufen:

Bekanntlich kann das Teillastverhalten eines Motors dadurch verbessert werden, dass eine Turboladercharakteristik gewählt wird, die bei Vollast einen schlechteren Wirkungsgrad ergibt. Es wird also eine kleinere Turbinenfläche gewählt, die den Receiverdruck höher aufstaut. Diese kleinere Turbinenfläche ist also für das günstige Teillastverhalten verantwortlich und verbessert dort auch den spez. Brennstoffverbrauch. Allerdings nur dort, denn gegen die Vollast hin verschlechtert sich wieder das Verhalten.

Das Gleiche passiert beim Aufladesystem mit Nutzturbine, sofern die Laderturbine für Teillast optimiert ist. Beim betrachteten Modellmotor ist der spezifische Verbrauch bei Teillast selbst ohne die Nutzturbine besser als im Ausgangsfall (100%- Fläche). Der Vorteil ist hier darin zu sehen, dass der verbrauch auf der ganzen Teillastkurve besser ist.

Wie dies quantitativ und qualitativ aussieht, zeigen die Diagramme in den Fig. 3, 4 und 5. Auf deren Abzisse ist jeweils die Motorlast in [%] angegeben. Auf den Ordinaten ist in Fig. 3 der Druck P_{R} im Abgasreceiver in [bar], in Fig. 4 der Ladedruck P_{L} in [bar] und in Fig. 5 der spez. Brennstoffverbrauch in [g/KWh] aufgetragen. In den drei Diagrammen sind die Kurven für Ausgangslage, d.h. ein Turbolader mit 100% Fläche mit A, jene für parallelgeschaltete Nutzturbine mit B und jene für seriengeschaltete Nutzturbine mit C bezeichnet.

Bei Vollast zeigt sich die bekannte Ausgangslage mit den erwähnten Werten P_{R} = 3,2 bar und P_{L} = 3,8, bar. Bei Anwendung der Nutzturbine und reduzierter Fläche der Laderturbine steigt bei unverändertem Ladedruck der Receiverdruck auf 3,6 bar. Man erkennt, dass im ganzen betrachteten Teillastbereich der Ladedruck mit Nutzturbine (B, C) etwas höher und der spez. Brennstoffverbrauch niedriger ist als beim Ausgangsfall (A).

Die Erkenntnis, dass bei seriengeschalteter Nutzturbine ein etwas höherer Ladedruck und somit ein etwas besseres Verhalten als bei der Parallelturbine zu erwarten ist, erklärt sich aus folgendem:

Was bei der Turboaufladung normalerweise der Grund für das Teillastproblem ist, nämlich dass der Druck vor Turbine wegen der konstanten Düsenfläche bei abnehmendem Massenstrom zusammenfällt, ist hier zum Teil günstig, da es auch über die Nutzturbine geschieht. Dadurch steigt das Druckverhältnis über der Laderturbine, was wieder einen höheren Ladedruck ermöglicht. Bei tiefer Teillast ist das Druckverhältnis über den Laderturbinen für Serie-und Parallelschaltung etwa gleich gross. Nur strömt bei der Serienschaltung der gesamte Massenstrom durch die Laderturbine, was bedeutet, dass bei gleichem Zustand der Gase mehr Leistung an der Serieladerturbine zur Verfügung steht.

Gemäss der Erfindung wird das Teillastverhalten nochmals beträchtlich verbessert, in dem die Nutzturbine bei einer vorgegebenen Teillast ausser Betrieb gesetzt wird.

Gemäss Fig. 1 wird hierzu in der Zuströmleitung 7' zur Nutzturbine 6' ein einfaches Absperrorgan 8', angeordnet, welches bei einer vorgegebenen, einstellbaren Teillast vorzugsweise selbsttätig schliesst.

Gemäss Fig. 2 wird in die Zuströmleitung 7" zur Nutzturbine 6" eine Umgehungsleitung 9 angeordnet, die in ein nicht gezeigtes Kamin mündet und die mit einem bei Vollast geschlossenem Absperrorgan 8" versehen ist. Dieses Absperrorgan 8" ist für selbsttätiges Öffnen bei vorgegebener Teillast ausgelegt.

Zur Betätigung der Absperrorgane 8', 8" können Betriebsgrössen wie bspw. der Ladedruck, die Motordrehzahl, der Regelstangenweg der Einspritzpumpe und dgl. herangezogen werden.

Die Diagramme in den Fig. 3, 4 und 5 zeigen die Wirkung dieser Massnahme. Die Betätigung der Absperrorgane 8' resp. 8" wird beim betrachteten Fall bei 60% Last vorgenommen.

Durch das Abstellen der Nutzturbine 6' wird bei der Parallelschaltung die Turbinenfläche nunmehr gegenüber dem konventionellen 100%- Fall um 30% gekürzt, gegenüber einer nichtabschaltbaren Nutzturbine um ca. 10%. Dies bewirkt eine nochmalige Steigerung des Receiverdruckes und als Folge hiervon eine massive Anhebung des Ladedruckes ( Kurvenzug D). Ein positiver Einfluss auf den spezifischen Brennstoffverbrauch ist ebenfalls gegeben.

Nicht ganz so wirkungsvoll ist die Massnahme bei der Serienschaltung (Kurvenzug E, nur in Fig. 4). Die Steigerung des Ladedrucks ergibt sich hier dadurch, dass durch das Öffnen der Umgehungsleitung 9 der bisherige, durch die Nutzturbine 6" verursachte Gegendruck fortfällt und somit die Ladeturbine 3" ein entsprechend grösseres Enthalpiegefälle verarbeiten kann.

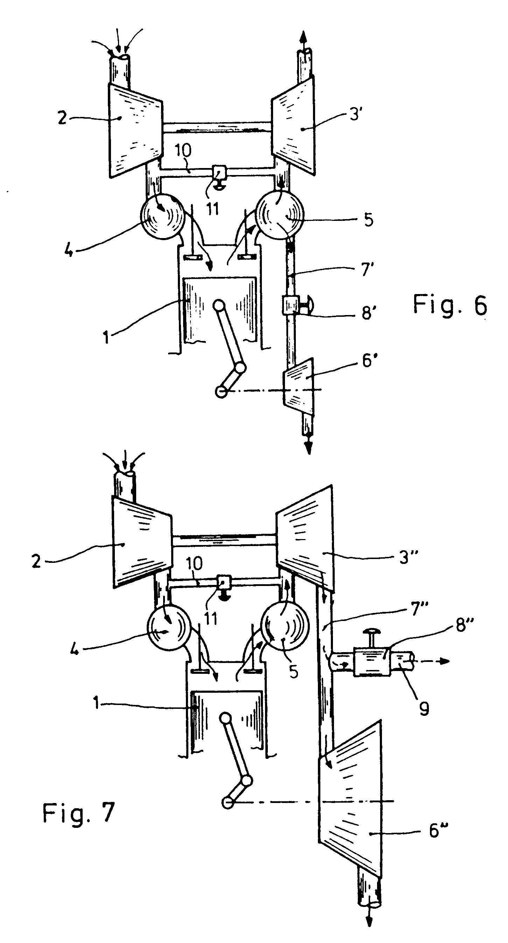

Die Fig. 6 und 7 zeigen Ausführungsbeispiele, wie sie möglich sind bei Dieselmotoren, die mit höherer Abgastemperatur arbeiten. Dies kann bei wärmeisolierten statt gekühlten Motoren der Fall sein, oder bei Motoren ohne Spülung oder solchen mit kleinerem Luftverhältnis. Die gleichen Massnahmen können getroffen werden, wenn Turbolader zur Anwendung gelangen, die noch höhere Gesamtwirkungsgrade haben, als heute erzielbar sind. Das grössere Energieangebot führt dann dazu, dass die Nutzturbine eine Leistung aufweist, die etwa 20%-30% der Leistung der Laderturbine betragen kann. Bei Parallelschaltung der Nutzturbine wird sich deren Durchflussquerschnitt gegenüber jenem der Laderturbine entsprechend vergrössern; bei Serienschaltung der Nutzturbine wird sich deren Druckverhältnis gegenüber jenem der Laderturbine entsprechend vergrössern. Die Abschaltung derartiger Nutzturbinen grosser Leistung kann zum Pumpen des Verdichters führen. Abhilfe schafft hier das an sich bekannte Anordnen einer Umblaseleitung 10 für die Ladeluft, welche in die Abgasleitung vor der Laderturbine mündet. Zweckmässigerweise ist diese Umblaseleitung regulierbar. Hierzu werden Drosseimittei 11 mit stetig veränderbarem Durchtrittsquerschnitt vorgesehen.

Es versteht sich, dass bei Nichtbeaufschlagung der Nutzturbine, die ja in der Regel mechanisch mit einem Verbraucher gekuppelt ist, Mittel zum Stillsetzen der Turbine vorgesehen werden, damit diese nicht ventiliert. Ist die Turbine bspw. über eine Flüssigkeitskupplung mit dem Motor verbunden, so kann dies auf einfache Art durch Ablassen der Flüssigkeit geschehen. Selbstverständlich wird man derartige Abschaltmittel und die hierfür erforderliche Regulierung im Hinblickauf die vermutliche Häufigkeit und Dauer des Stillstandes auslegen. Auch die Art des Verbrauchers, z.B. Motor, Generator, Pumpe udgl. wird hierbei zu berücksichtigen sein.

## Patentansprüche

1. Abgasturbolader an aufgeladenem Dieselmotor mit separater, leistungsabgebender Nutzturbine (6',6") und Mitteln (8',8") zu deren Ausserbetriebsetzung, dadurch gekennzeichnet,
- dass die direkt mit dem Abgasreceiver (5) des Dieselmotors (1) verbundene Laderturbine (3',3") mit einer für Teillast optimierten Turbinenfläche versehen ist, welche so bemessen ist, dass auch im Vollastbetriebspunkt bei zugeschalteter Nutzturbine (6',6") der gewänschte Ladedruck erreicht wird,
- dass die Nutzturbine so bemessen ist, dass sie eine Leistung von bis zu 30% der Laderturbinenleistung aufweisen kann,
- dass die Nutzturbine schlagartig bei einer vorbestimmten Motorteillast ausser Betrieb gesetzt wird und oberhalb dieses Grenzwertes zugeschaltet wird.

2. Abgasturbolader nach Anspruch 1, dadurch gekennzeichnet, dass bei Paralleschaltung der Nutzturbine (6') zur Laderturnine (3') die Zuströmleitung (7') zur Nutzturbine (6') mit einem Absperrorgan (8') versehen ist, welches bei einer vorbestimmten Motorteillast selbsttätig schliesst.

3. Abgasturbolader nach Anspruch 1, dadurch gekennzeichnet, dass bei stromabwärts zur Laderturbine (3") geschalteter Nutzturbine (6") deren Zuströmleitung (7") mit einer zur Atmosphäre führenden Umgehungsleitung (9) mit darin angeordnetem Absperrorgan (8") versehen ist, welches bei einer vorbestimmten Motorteillast selbsttätig öffnet.

4. Abgasturbolader nach Anspruch 2 oder 3, dadurch gekennzeichnet, dass die Betätigung der Absperrklappe (8', 8") über eine Betriebsgrösse erfolgt.

## Claims

1. Exhaust gas turbocharger on a supercharged diesel engine with a separate power turbine (6', 6") which produces power and with means (8', 8") for putting it out of operation,
characterised in that
- the supercharger turbine (3', 3") directly connected to the exhaust gas receiver (5) of the diesel engine (1) is provided with a turbine area optimised for part load, which area is so dimensioned that the desired boost pressure is attained even in full-load operation with the power turbine (6', 6") switched on,
- the power turbine is dimensioned in such a way that it can have a power of up to 30% of the power of the supercharger turbine,
- the power turbine is abruptly put out of operation at a certain engine part load and is switched on above this limiting value.

2. Exhaust gas turbocharger according to Claim 1, characterized in that when the power turbine (6') is connected in parallel to the supercharger turbine (3'), the supply duct (7') to the power turbine (6') is provided with a shut-off element (8') which closes automatically at a preselected part load of the engine.

3. Exhaust gas turbocharger according to Claim 1, characterized in that when the power turbine(6") is connected downstream of the supercharger turbine (3"), the inlet duct 7" ) of the power turbine is provided with a bypass duct (9) leading to the atmosphere with a shut-off element (8") located within it, which shut-off element opens automatically at a preselected part load of the engine.

4. Exhaust gas turbocharger according to Claim 2 or 3, characterized in that the actuation of the shut-off flap (8', 8") takes place by means of an operating parameter.

## Revendications

1. Turbocompresseur à gaz d'échappement pour moteur Diesel suralimenté avec une turbine de récupération (6', 6") séparée fournissant de la puissance et des moyens (8', 8") pour la mise hors service de cette dernière, caractérisé en ce que
- la turbine de suralimentation (3', 3") reliée directement au collecteur (5) des gaz d'échappement du moteur Diesel (1) est pourvue d'une section de turbine optimisée pour une charge partielle, cette turbine étant dimensionnée de telle sorte que, dans le domaine de la pleine charge également, la pression d'admission désirée est atteinte, la turbine de récupération (6', 6") étant en service,
- la turbine de récupération est dimensionnée de manière à pouvoir fournir une puissance allant jusqu'à 30% de la puissance de la turbine de suralimentation,
- et la turbine de récupération est soudainement mise hors service pour une charge partielle prédéterminée du moteur et mise en service au-dessus de cette valeur seuil.

2. Turbocompresseur à gaz d'échappement suivant la revendication 1, caractérisé en ce qu'en cas de montage en parallèle de la turbine de récupération (6') avec la turbine de suralimentation (3'), la conduite d'admission (7') de la turbine de récupération (6') est pourvue d'un organe d'arrêt (8') qui se ferme automatiquement pour une charge partielle prédéterminée du moteur.

3. Turbocompresseur à gaz d'échappement suivant la revendication 1, caractérisé en ce qu'en cas d'une turbine de récupération (6") montée en aval de la turbine de suralimentation (3"), la conduite d'admission (7") de la turbine de récupération (6") est pourvue d'une conduite de déviation (9) conduisant à l'atmosphère, avec dans cette conduite de déviation un organe d'arrêt (8") qui s'ouvre automatiquement pour une charge partielle prédéterminée du moteur.

4. Turbocompresseur à gaz d'échappement suivant la revendication 2 ou 3, caractérisé en ce que la commande des organes d'arrêt (8, 8") est assurée en utilisant un paramètre de marche.
